## Europäisches Patentamt
## European Patent Office
## Office européen des brevets

(19)

(11) Veröffentlichungsnummer: **0 087 760**
**B1**

(12)

# EUROPÄISCHE PATENTSCHRIFT

(45) Veröffentlichungstag der Patentschrift:
10.07.85

(51) Int. Cl.⁴: **H 04 L 11/00**

(21) Anmeldenummer: 83101788.4

(22) Anmeldetag: 23.02.83

(54) Verfahren zum Abgeben von Zusatzinformationen in Verbindung mit über eine Datenvermittlungsstelle zu übertragenden Nachrichtensignalen.

(30) Priorität: 25.02.82 DE 3206796

(43) Veröffentlichungstag der Anmeldung:
07.09.83 Patentblatt 83/36

(45) Bekanntmachung des Hinweises auf die Patenterteilung:
10.07.85 Patentblatt 85/28

(84) Benannte Vertragsstaaten:
AT CH DE IT LI SE

(56) Entgegenhaltungen:
EP - A - 0 017 035
DE - C - 2 912 649

NATIONAL TELECOMMUNICATIONS CONFERENCE,
Band 3, 29. November - 3. Dezember 1981, New Orleans,
Seiten F5.3.1 - F5.3.5, New York, USA, R. HAGEN:
"Teletex, a new text communication service and its
impact on network modules"
HASLER-MITTEILUNGEN, Band 35, nr. 3, September
1876, Seiten 67-75, Bern, CH., M. HOCHREUTENER:
"Die Anwendung der T200-Telex- und Datenzentrale in
der SChweiz"

(73) Patentinhaber: Siemens Aktiengesellschaft, Berlin und
München Wittelsbacherplatz 2, D-8000 München 2 (DE)

(72) Erfinder: Torggler, Norbert, Dipl.-Ing.,
Bellinzonastrasse 7, D-8000 München 71 (DE)
Erfinder: Franz, Dietmar, Ing. grad.,
Edelweissstrasse 66, D-8039 Puchheim (DE)

## Beschreibung

Die Erfindung bezieht sich auf ein Verfahren zum Abgeben von Zusatzinformationen, insbesondere von Datums- und Uhrzeitangaben, in Verbindung mit Nachrichtensignalen, die über eine einem öffentlichen Vermittlungsnetz zugehörige Datenvermittlungsstelle übertragen werden, an der Fernschreib-Teilnehmerstellen angeschlossen sind, die Nachrichtensignale mit einer ersten Übertragungsprozedur abzugeben und aufzunehmen vermögen, und an der Teletex-Teilnehmerstellen angeschlossen sind, die Nachrichtensignale mit einer zweiten von der ersten Übertragungsprozedur verschiedenen Übertragungsprozedur abzugeben bzw. aufzunehmen vermögen, wobei die Übertragung von Nachrichtensignalen zwischen Fernschreib-Teilnehmerstellen und Teletex-Teilnehmerstellen über wenigstens einen Signalumsetzer erfolgt, der ebenfalls an der Datenvermittlungsstelle angeschlossen ist und der eine Umsetzung der mit der ersten bzw. zweiten Übertragungsprozedur ihm zugeführten Nachrichtensignale in mit der zweiten bzw. ersten Übertragungsprozedur weiterzuleitende Nachrichtensignale vornimmt.

Es ist bereits eine als Signalumsetzer zu bezeichnende Schaltungsanordnung zur Übertragung von Nachrichtensignalen zwischen entsprechend einer ersten Übertragungsprozedur arbeitenden Teilnehmerstellen und entsprechend einer von der ersten Übertragungsprozedur verschiedenen zweiten Übertragungsprozedur arbeitenden Teilnehmerstellen über eine Datenvermittlungsstelle bekannt (DE-PS 2 912 649). Bei dieser bekannten Schaltungsanordnung ist eine Anzahl von Umsetzeinrichtungen vorgesehen, die an zu zwei verschiedenen Gruppen von Anschlußschaltungen gehörende Anschlußschaltungen der Datenvermittlungsstelle angeschlossen sind. Im Zuge einer Verbindung zwischen einer mit der ersten Übertragungsprozedur arbeitenden Teilnehmerstelle und einer mit der zweiten Übertragungsprozedur arbeitenden Teilnehmerstelle wird eine derartige Umsetzeinrichtung für die Ausführung der erforderlichen Umsetzvorgänge benutzt.

Bei verschiedenen bekannten Übertragungsprozeduren, z. B. bei einer Teletex-Übertragungsprozedur, ist vorgesehen, daß bei einer bestehenden Verbindung den zu übertragenden Nachrichtensignalen Datums- und Uhrzeitangaben als Zusatzinformationen von den Teletex-Teilnehmerstellen her vorangestellt werden. Bei Verbindungen von Telex-Teilnehmerstellen zu Teletex-Teilnehmerstellen hin ist es bisher jedoch nicht möglich, derartige Zusatzinformationen im Bedarfsfalle zusammen mit den zu übertragenden Nachrichtensignalen abzugeben.

Der vorliegenden Erfindung liegt nun die Aufgabe zugrunde, einen Weg zu zeigen, wie auf relativ einfache Weise ohne wesentliche Belastung der Datenvermittlungsstelle Zusatzinformationen in Verbindung mit über diese Datenvermittlungsstelle von Fernschreib-Teilnehmerstellen zu Teletex-Teilnehmerstellen zu übertragenden Nachrichtensignale abgegeben werden können.

Gelöst wird die vorstehend aufgezeigte Aufgabe bei einem Verfahren der eingangs genannten Art erfindungsgemäß dadurch, daß nach einer Belegung des Signalumsetzers von einer Fernschreib-Teilnehmerstelle her mit jedem Versuch des Aufbaus einer Verbindung von dem Signalumsetzer zu einer Teletex-Teilnehmerstelle hin die entsprechenden Zusatzinformationen von der Datenvermittlungsstelle in einen Speicher des Signalumsetzers eingespeichert werden und daß diese Zusatzinformationen aus dem genannten Speicher gegebenenfalls zusammen mit den in dem Signalumsetzer enthaltenen, von der Fernschreib-Teilnehmerstelle abgegebenen Nachrichtensignalen nach erfolgtem Aufbau einer Verbindung zwischen dem Signalumsetzer und der Teletex-Teilnehmerstelle an diese abgegeben werden. Die Erfindung bringt den Vorteil mit sich, daß die eigentliche Abgabe der Zusatzinformationen durch den Signalumsetzer erfolgt, so daß hierdurch in der Datenvermittlungsstelle keine zusätzliche dynamische Belastung auftritt. Außerdem ergibt sich daraus der Vorteil, daß für das Abgeben von Datums- und Uhrzeitangaben als Zusatzinformationen keine Datum und Uhrzeit bereitstellenden Einrichtungen in dem Signalumsetzer erforderlich sind. Damit entfällt eine Synchronisierung von Datum und Uhrzeit bereitstellenden Einrichtungen in der Datenvermittlungsstelle und in dem Signalumsetzer.

Im folgenden wird die Erfindung anhand von Zeichnungen beispielsweise näher beschrieben.

Fig. 1 zeigt in einem Blockschaltbild eine Schaltungsanordnung, bei der die Erfindung angewandt ist.

Fig. 2 zeigt ein Diagramm, auf das im Zuge der Erläuterung der Erfindung eingegangen wird.

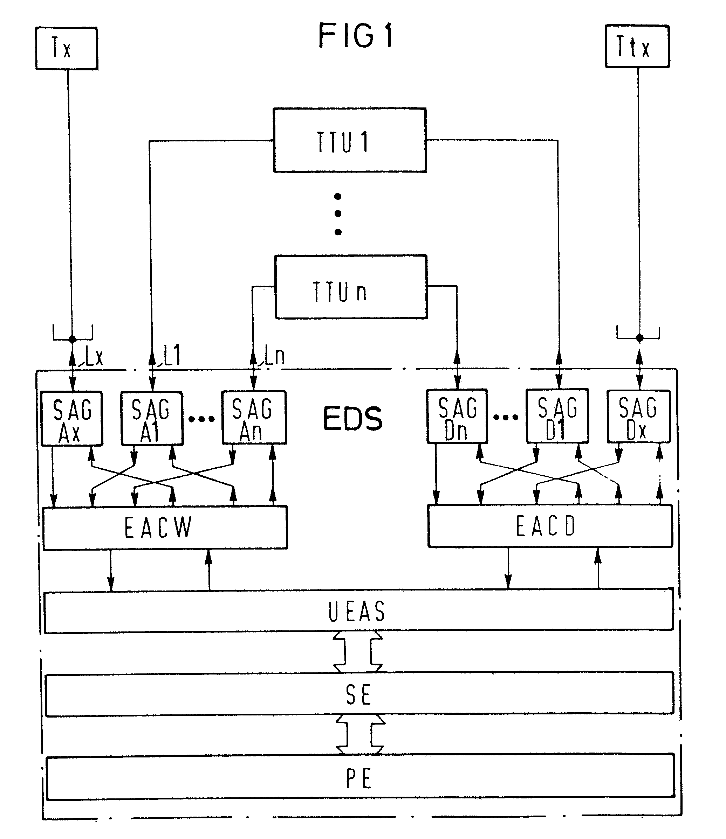

In Fig. 1 ist wie in dem eingangs genannten Patent ausschnittweise eine bekannte elektronische Datenvermittlungsstelle EDS dargestellt. Von dieser Datenvermittlungsstelle EDS sind lediglich zu einer ersten Gruppe von Anschlußschaltungen gehörende Anschlußschaltungen SAGAx, SAGA1 bis SAGAn, zu einer zweiten Gruppe von Anschlußschaltungen gehörende Anschlußschaltungen SAGDx, SAGD1 bis SAGDn, den einzelnen Gruppen von Anschlußschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen dienen dazu, digitale Nachrichtensignale polaritätswechselweise zu verarbeiten. Die mit dem anderen Eingabe-/Ausgabe-Codewandler EACD verbundenen Anschlußschaltungen dienen zur Verarbeitung von sogenannten Bitgruppen, das sind jeweils eine Mehrzahl von Bits, beispielsweise acht Bits, umfassende digitale Nachrichtensignale, die auch als Envelopes bezeichnet werden.

Von den in Fig. 1 angedeuteten Anschlußschaltungen sind einige der Polaritätswechsel verarbeitenden Anschlußschaltungen mit Teilnehmerstellen verbunden, welche digitale Nachrichtensignale mit einer ersten Datenübertragungsprozedur abgeben und aufnehmen. Bei diesen Teilnehmerstellen mag es sich um übliche Fernschreib- bzw. Telex-Teilnehmerstellen handeln, von denen in der Zeichnung eine mit Tx angedeutet ist. Diese Telex-Teilnehmerstellen mögen mit einer Datenübertragungsrate von 50 Bd und unter Ausnutzung des internationalen Telegrafenalphabets Nr. 2 arbeiten, also mit einem Start-Stop-Datenformat. Die Telex-Teilnehmerstelle Tx ist dabei über eine beispielsweise im Halbduplexbetrieb ausgenutzte Leitung Lx an der Anschlußschaltung SAGAx angeschlossen. Ein auf dieser Leitung Lx eingetragenes Vielfachzeichen soll andeuten, daß an der betreffenden Anschlußschaltung SAGAx noch mehrere Telex-Teilnehmerstellen angeschlossen sein können.

Mit einigen der digitale Nachrichtensignale in Form von Bitgruppen bzw. Envelopes verarbeitenden Anschlußschaltungen sind Teilnehmerstellen verbunden, die digitale Nachrichtensignale seriell in Form von Bitgruppen bzw. Envelopes abgeben bzw. aufnehmen können. Bei diesen Teilnehmerstellen mag es sich um sogenannte Bürofernschreibstationen handeln, die auch als Teletex-Teilnehmerstellen bezeichnet werden. In der Zeichnung ist eine derartige Teletex-Teilnehmerstelle mit Ttx angedeutet. Diese Teletex-Teilnehmerstelle ist an der Anschlußschaltung SAGDx angeschlossen. Ein in der betreffenden Verbindungsleitung eingezeichnetes Vielfachzeichen soll dabei andeuten, daß an der betreffenden Anschlußschaltung SAGDx noch mehrere Teletex-Teilnehmerstellen angeschlossen sein können. Bezüglich der Teletex-Teilnehmerstellen sei angemerkt, daß diese beispielsweise seriell auftretende digitale Nachrichtensignale entsprechend dem internationalen Alphabet IA No. 5 mit einer Datenübertragungsrate von 2400 bis/s abgeben und aufnehmen können, und zwar als synchrone Datensignale.

Mit der in Fig. 1 dargestellten Datenvermittlungsstelle EDS ist eine Anzahl von Signalumsetzern TTU1 bis TTUn verbunden. Der Aufbau dieser Signalumsetzer ist in dem eingangs genannten Patent bereits beschrieben worden; er wird daher hier vorausgesetzt. Der Signalumsetzer TTU1 ist über eine Leitung L1 sowohl sendeseitig als auch empfangsseitig mit der Anschlußschaltung SAGA1 verbunden. In entsprechender Weise ist der Signalumsetzer TTUn über die Leitung Ln mit der Anschlußschaltung SAGAn verbunden. Mit weiteren Signaleingängen/Signalausgängen sind die betreffenden Signalumsetzer mit den Anschlußschaltungen SAGD1 bzw. SAGDn verbunden. Über die erwähnten Verbindungsleitungen nehmen die Signalumsetzer die jeweils hinsichtlich der Übertragungsprozedur umzusetzenden digitalen Nachrichtensignale ab. Dies bedeutet, daß die Signalumsetzer die ihnen zugeführten Telexsignale in in den Teletex-Teilnehmerstellen wiedergebbare digitale Signale umsetzen und von den Teletex-Teilnehmerstellen abgegebene digitale Nachrichtensignale in Telexsignale umsetzen.

Nunmehr sei das Verfahren gemäß der Erfindung unter Bezugnahme auf die in Fig. 1 dargestellte Schaltungsanordnung näher erläutert. Hierzu wird beispielsweise der Fall betrachtet, daß den digitalen Nachrichtensignalen, die von einer Telex-Teilnehmerstelle zu einer Teletex-Teilnehmerstelle zu übertragen sind, Zusatzinformationen in Form von aktuellen Datums- und Uhrzeitangaben von der Datenvermittlungsstelle her zur Verfügung gestellt werden. Die Übertragung in umgekehrter Richtung, nämlich die Übertragung von digitalen Nachrichtensignalen von einer Teletex-Teilnehmerstelle zu einer Telex-Teilnehmerstelle, wird hierbei nicht betrachtet, da Teletex-Teilnehmerstellen im allgemeinen bei einer bestehenden Verbindung den eigentlichen Nachrichtensignalen bereits Zusatzinformationen in Form von Datums- und Uhrzeitangaben selbst voranstellen, nachdem diese die Datums- und Uhrzeitangaben im Zuge des üblichen Verbindungsaufbaus von der Datenvermittlungsstelle her zugesendet bekommen haben.

Für den vorgenannten Fall, der nunmehr ausschließlich betrachtet wird, wird von der Telex-Teilnehmerstelle Tx ausgehend eine Verbindung zu der Teletex-Teilnehmerstelle Ttx hergestellt. Die hierzu erforderlichen Kommunikationen zwischen der Telex-Teilnehmerstelle Tx und der Datenvermittlungsstelle EDS werden entsprechend den Kriterien der Teilnehmersignalisierung für Telex-Teilnehmerstellen durchgeführt. Die dabei im Zuge des Verbindungsaufbaus von der Telex-Teilnehmerstelle her übertragenen Wahlinformationen enthalten Wählzeichen (Zugangskennziffern), aus denen hervorgeht, daß eine Verbindung zu einer Teletex-Teilnehmerstelle Ttx gewünscht ist, d. h. daß eine Umsetzung der Übertragungsprozedur vorzunehmen ist. Auf solche Wählzeichen wird in der Datenvermittlungsstelle EDS aufgeprüft. Bei Vorliegen solcher Wählzeichen belegt die Datenvermittlungsstelle EDS einen bis dahin freien Signalumsetzer TTU1 bis TTUn. Der Signalumsetzer TTU1 soll beispielsweise ein solcher freier Signalumsetzer sein.

Nach der Belegung des Signalumsetzers TTU1 leitet die Datenvermittlungsstelle EDS die für den weiteren Verbindungsaufbau erforderlichen Signalisierungsinformationen (z. B. Wahlinformationen) über die Leitung L1 an den Signalumsetzer TTU1 weiter. Die Weiterleitung solcher Signalisierungsinformationen erfolgt nach den Kriterien einer Zwischenamtssignalisierung für Telexverkehr.

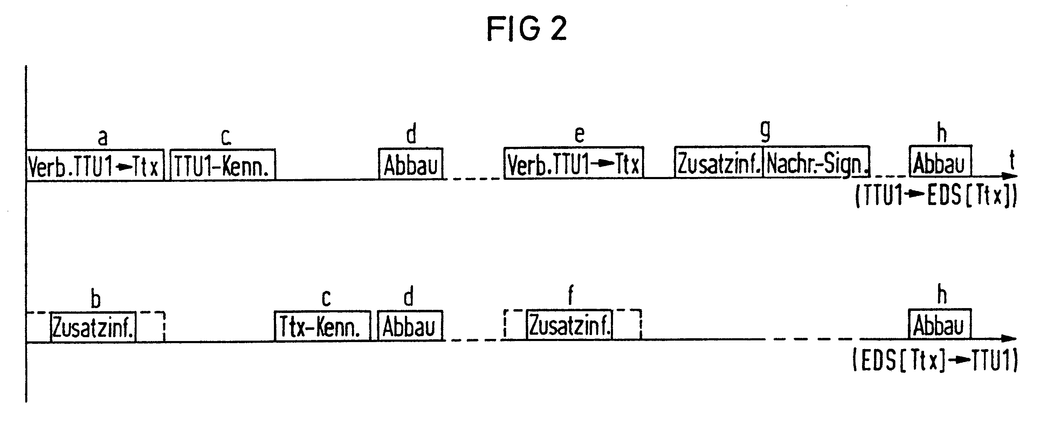

Nach der Übernahme der genannten Signalisierungsinformationen wird von dem Signalumsetzer TTU1 her überprüft, ob die von der Telex-Teilnehmerstelle Tx her als Empfänger ausgewählte Teletex-Teilnehmerstelle Ttx erreichbar ist. Hierzu wird von dem Signalumsetzer TTU1 her kurzzeitig eine Verbindung über die Anschlußgruppen SAGD1 und SAGDx zu der Teletex-Teilnehmerstelle hin aufgebaut (a in Fig. 2). In dieser Verbindungsaufbauphase werden dem Signalumsetzer TTU1 als Zusatzinformationen Datums- und Uhrzeitangaben von der Datenvermittlungsstelle EDS her zugeführt, da bei einer Telexübertragung diese Angabe von der Telex-Teilnehmerstelle Tx her nicht automatisch und nicht abgestimmt auf die aktuelle Zeit des Eintrittes in das Teletexnetz übertragen werden (b in Fig. 2).

In dem Signalumsetzer TTU1 sind nun Speicherzellen reserviert, in denen die nach dem Verbindungsaufbau ggf. zu übertragenden Nachrichtensignale zur Umsetzung in entsprechende Teletexzeichen zwischengespeichert werden. In diese reservierten Speicherzellen werden die zuvor von dem Signalumsetzer TTU1 empfangenen Datums- und Uhrzeitangaben ebenfalls eingespeichert.

Nach dem Aufbau der genannten Verbindung zwischen dem Signalumsetzer TTU1 und der Teletex-Teilnehmerstelle Ttx werden die zuvor in den Speicherzellen des Signalumsetzers gespeicherten Datums- und Uhrzeitangaben an diese Teletex-Teilnehmerstelle weitergeleitet. Daran schließt sich noch ein Austausch der Kennungen von Signalumsetzer TTU1 und Teletex-Teilnehmerstelle Ttx an (c in Fig. 2). Nach diesem Austausch der Kennungen, der lediglich zur Überprüfung der Erreichbarkeit der Teletex-Teilnehmerstelle Ttx dient, wird zunächst diese Verbindung wieder abgebaut (d in Fig. 2). Es sei hierzu angemerkt, daß die für einen Verbindungsaufbau zwischen dem Signalumsetzer TTU1 und der Datenvermittlungsstelle EDS bzw. zwischen der Datenvermittlungsstelle EDS und der Teletex-Teilnehmerstelle Ttx erforderlichen Kommunikationen nach den Kriterien der CCITT-Empfehlung X.71 bzw. X.21 erfolgen.

Erst nach erfolgtem Abbau der Verbindung zwischen dem Signalumsetzer und der Teletex-Teilnehmerstelle wird die zuvor von der Telex-Teilnehmerstelle Tx eingeleitete Verbindung zu dem Signalumsetzer hin endgültig hergestellt. Hieran schließt sich eine Übertragung der von der Telex-Teilnehmerstelle Tx her abzugebenden Nachrichtensignale zu dem Signalumsetzer hin an.

Die auf diese Weise von dem Signalumsetzer TTU1 empfangenen Nachrichtensignale (Telexsignale) werden anschließend in den oben erwähnten reservierten Speicherzellen zwischengespeichert.

Nach dem vollständigen Empfang der zuvor von der Telex-Teilnehmerstelle Tx her übertragenen Nachrichtensignale veranlaßt der Signalumsetzer TTU1, eine erneute Verbindung zu der Teletex-Teilnehmerstelle Ttx aufzubauen (e in Fig. 2).

Bei diesem Verbindungsaufbau werden dem Signalumsetzer TTU1 wiederum Datums- und Uhrzeitangaben von der Datenvermittlungsstelle her zugeführt und in den reservierten Speicherzellen, in denen zuvor schon die von der Telex-Teilnehmerstelle Tx her übertragenen Nachrichtensignale eingespeichert wurden, eingespeichert (f in Fig. 2).

Nach einem erfolgreichen Verbindungsaufbau übermittelt der Signalumsetzer TTU1 die in den reservierten Speicherzellen zwischengespeicherten Datums- und Uhrzeitangaben sowie die darin zwischengespeicherten Nachrichtensignale gemäß der zu verwendenden Übertragungsprozedur an die Teletex-Teilnehmerstelle Ttx (g in Fig. 2). Vor der Übermittlung der genannten Signale erfolgt im übrigen noch eine Umsetzung der Datenformate zumindest der Nachrichtensignale.

Nach der Übermittlung der Nachrichtensignale einschließlich der Datums- und Uhrzeitangaben werden die zwischen dem Signalumsetzer TTU1 und der Telex-Teilnehmerstelle bzw. der Teletex-Teilnehmerstelle bestehenden Verbindungen in bekannter Weise nach den Kriterien der dafür in Frage kommenden Signalisierungsprozedur abgebaut (h in Fig. 2).

Es sei hier noch erwähnt, daß die Datums- und Uhrzeitangaben aus einer Speicherzelle (von der zentralen Programmsteuereinheit PE) der Datenvermittlungsstelle EDS entnehmbar sind.

Obwohl vorstehend die Abgabe von Datums- und Uhrzeitangaben erläutert worden ist, dürfte einzusehen sein, daß mit dem Verfahren gemäß der Erfindung beliebige von der Datenvermittlungsstelle EDS her bereitgestellte Zusatzinformationen in Verbindung mit über die Datenvermittlungsstelle EDS zu übertragenden Nachrichtensignalen abgebbar sind. So können beispielsweise der jeweiligen Teletex-Teilnehmerstelle auch fortlaufende Nummern bezüglich der von Fernschreib-Teilnehmerstellen her zugeführten Nachrichtensignale bzw. Fernschreiben im Zuge der erläuterten Übertragung der Nachrichtensignale zugeführt werden.

**Patentanspruch**

Verfahren zum Abgeben von Zusatzinformationen, insbesondere von Datums- und Uhrzeitangaben, in Verbindung mit Nachrichtensignalen, die über eine einem öffentlichen Vermittlungsnetz zugehörige Datenvermittlungsstelle (EDS) übertragen werden, an der Fernschreib-Teilnehmerstellen (Tx) angeschlossen sind, die Nachrichtensignale mit einer ersten Übertragungsprozedur abzugeben und aufzunehmen vermögen, und an der Teletex-Teilnehmerstellen (Ttx) angeschlossen sind, die Nachrichtensignale mit einer zweiten von der ersten Übertragungsprozedur verschiedenen Übertragungsprozedur abzugeben bzw. aufzunehmen vermögen, wobei die Übertragung von Nachrichtensignalen zwischen Fernschreib-Teilnehmerstellen und Teletex-Teilnehmerstellen über wenigstens einen Signalumsetzer (TTU1 bis TTUn) erfolgt, der ebenfalls an der Datenvermittlungsstelle (EDS) angeschlossen ist und der eine Umsetzung der mit der ersten bzw. zweiten Übertragungsprozedur ihm zugeführten Nachrichtensignale in mit der zweiten bzw. ersten Übertragungsprozedur weiterzuleitende Nachrichtensignale vornimmt, dadurch gekennzeichnet, daß nach einer Belegung des Signalumsetzers (TTU1 bis TTUn) von einer Fernschreib-Teilnehmerstelle (Tx) her mit jedem Versuch des Aufbaues einer Verbindung von dem Signalumsetzer (TTU1 bis TTUn) zu einer Teletex-Teilnehmerstelle (Ttx) hin die entsprechenden Zusatzinformationen von der Datenvermittlungsstelle (EDS) in einen Speicher des Signalumsetzers eingespeichert werden und daß diese Zusatzinformationen aus dem genannten Speicher gegebenenfalls zusammen mit den in dem Signalumsetzer enthaltenen, von der Fernschreibteilnehmerstelle (Tx) abgegebenen Nachrichtensignalen nach erfolgten Aufbau einer Verbindung zwischen dem Signalumsetzer und der Teletex-Teilnehmerstelle an diese abgegeben werden.

### Claim

A process for the emission of items of additional information, in particular date and time information, in combination with communications signals, which are transmitted via a data exchange (EDS) which is assigned to a public switching network and which is connected to telex subscriber stations (Tx) which are capable of emitting and receiving communications signals by means of a first transmission procedure, and which is connected to teletex subscriber stations (Ttx) which are capable of emitting and receiving communications signals by means of a second transmission procedure which differs from the first, where the transmission of communications signals between telex subscriber stations and teletex subscriber stations takes place via at least one signal converter (TTU1 to TTUn) which is likewise connected to the data exchange (EDS) and which carries out a conversion of the communications signals with which it has been supplied in accordance with the first or second transmission procedure, into communications signals which are to be forwarded in accordance with the second or first transmission procedure respectively, characterised in that following the seizure of the signal converter (TTU1 to TTUn) by a telex subscriber station (Tx), on each attempt to establish a connection from the signal converter (TTUi to TTUn) to a teletex subscriber station (Ttx) the appropriate items of information from the data exchange (EDS) are input into a store of the signal converter, and that these items of additional information from the aforementioned store, possibly together with the communications signals which are contained in the signal converter and have been emitted from the telex subscriber station (Tx), are emitted to the teletex subscriber station following the establishment of a connection between the signal converter and the teletex subscriber station.

### Revendication

Procédé pour fournir des informations suplémentaires, en particulier des indications concernant la date et l'heure, en liaison, avec des signaux d'informations qui sont transmis, par l'intermédiaire d'un poste de commutation de donnée (EDS) appartenant à un réseau de commutation public et auquel sont reliés des postes d'abonnés aux télex (Tx) capables d'émettre et de recevoir les signaux d'informations avec une première procédure de transmission ainsi que des postes d'abonnés au télétex (Ttx) capables d'émettre et de recevoir les signaux d'informations avec une seconde procédure de transmission qui est différente de la première procédure de transmission, la transmission de signaux d'informations entre les postes d'abonnés au télex et les postes d'abonnés au télétex ayant lieu par l'intermédiaire d'au moins un convertisseur de signaux (TTU1 à TTUn) qui est également relié au poste de commutation des données (EDS) et qui opère une conversion de signaux d'informations qui lui ont été fournis avec la première ou la seconde procédure de transmission en des signaux d'informations qui sont à retransmettre avec al seconde ou la première procédure de transmission, caractérisé par le fait qu'après occupation du convertisseur de signaux (TTU1 à TTUn) à partir d'un poste d'abonné au télex (Tx), et lors de chaque tentative d'établissement d'une liaison entre le convertisseur de signaux (TTU1 à TTUn) et un poste d'abonné au télétex (Ttx), les informations supplémentaires correspondantes sont mémorisées du poste de commutation des données (EDS) dans une mémoire du convertisseur de signaux, et que ces informations supplémentaires sont émises, à partir de ladîte mémoire, éventuellement avec les signaux d'informations qui sont contenus dans le convertisseur de signaux et qui sont émis par le poste d'abonné au télex, au poste d'abonné au télétex, après l'établissement d'une liaison entre le convertisseur de signaux et le poste d'abonné au télétex.

# FIG 1

# FIG 2